# FASCICULE DE BREVET EUROPEEN

(11) **EP 3 677 020 B1**
(45) Date de publication et mention de la délivrance du brevet: **11.08.2021**
(21) Numéro de dépôt: 18755846.5
(22) Date de dépôt: 24.08.2018
(51) Int. Cl.: H04N 5/353, H04N 5/235, G06K 7/10

(54) **PROCÉDÉ D'ACQUISITION D'IMAGE PAR UN CAPTEUR D'IMAGE DE TYPE CMOS POUR LA RECONNAISSANCE DE CODE LISIBLE OPTIQUEMENT**
VERFAHREN ZUR BILDERFASSUNG DURCH EINEN BILDSENSOR VOM CMOS-TYP ZUR ERKENNUNG EINES OPTISCH LESBAREN CODES
METHOD OF IMAGE ACQUISITION BY AN IMAGE SENSOR OF CMOS TYPE FOR THE RECOGNITION OF OPTICALLY READABLE CODE

(30) Priorité: 01.09.2017 FR 1758086
(43) Date de publication de la demande: 08.07.2020
(73) Titulaire: Teledyne E2V Semiconductors SAS, 38120 Saint-Egrève (FR)
(72) Inventeur: LIGOZAT, Thierry, 38950 Quaix en Chartreuse (FR); DIASPARRA, Bruno, 38180 Seyssins (FR); GESSET, Stéphane, 38380 Saint Laurent du Pont (FR); POWELL, Gareth, 38140 St Martin D'Uriage (FR)
(74) Mandataire: Marks & Clerk France
(86) Numéro de dépôt international: PCT/EP2018/072898
(87) Numéro de publication internationale: WO 2019/042890

(56) Documents cités:
- EP-A1- 1 791 074
- EP-A2- 0 957 448
- WO-A2-96/13799
- WO-A2-2006/098955

## Description

### DOMAINE TECHNIQUE

La présente invention concerne un procédé de commande de prise d'image par un capteur de type CMOS, à pixels actifs (structure de pixel à élément photosensible et transistors de commande) pour la reconnaissance de code lisible optiquement. Ces capteurs sont intégrés dans des dispositifs électro-optiques de reconnaissance de code, généralement appelés lecteurs de code barre. Ces lecteurs sont couramment employés dans de nombreux secteurs industriels et commerciaux, comme moyens de collecte de données automatisée, remplaçant la saisie au clavier, pour des applications aussi variées que la vente, la traçabilité (fabrication, distribution), l'expédition de marchandises, les soins de santé, la gestion de stock, le prêt de livres ...

Ces codes généralement imprimés (étiquette) ou gravés en surface d'un objet, suivent une symbologie généralement bichromatique qui peut-être monodimensionnelle et linéaire (code barre) ou multidimensionnelle (QR code, PDF 417, Data Matrix ....). Chaque symbole ou motif représente de façon biunivoque une valeur d'information (ou un ensemble de valeurs) qui est associée à l'objet sur lequel est apposé le code, tel qu'un prix et/ou une remise, des données de traçabilité (date, lieu de fabrication, d'expédition, de prélèvement....), etc. Le décodage du code permet d'obtenir de façon fiable la ou les valeurs d'information associée(s) à l'objet concerné.

### ETAT DE LA TECHNIQUE

Un lecteur de code à capteur d'image matriciel de type CMOS comprend un dispositif d'éclairage comportant une source lumineuse (leds et/ou laser par exemple) associée à un ensemble optique (miroirs, lentilles) prévue pour éclairer le code cible à acquérir. Le capteur prend une image de ce code cible et transmet les données d'image obtenues à un système externe de traitement numérique (relié au lecteur par un moyen de communication quelconque, avec ou sans fil) et c'est ce système externe au capteur qui effectue le décodage du code.

Ce qui est exigé dans ce type d'application, c'est que le capteur fournisse le plus rapidement possible une image du code qui soit de bonne qualité, c'est-à-dire de qualité suffisante pour en permettre le décodage ou la reconnaissance sans erreur. Plus précisément, l'image fournie par le capteur doit être bien positionnée dans la dynamique utile du capteur, c'est-à-dire ni trop sous-exposée, sinon le rapport signal sur bruit sera trop faible ; ni trop surexposée, pour ne pas perdre trop d'information utile.

Une fois la puissance lumineuse de la source d'éclairage interne du lecteur réglée pour l'application, la qualité de l'image obtenue dépend des paramètres de prise de vue du capteur, et notamment du temps d'exposition des pixels. Le temps d'exposition est généralement préréglé en usine ou sur site par un opérateur, à une valeur qui est définie en fonction des conditions d'utilisation opérationnelles : ambiance lumineuse (utilisation en extérieur, en intérieur, sous lumière artificielle) ; puissance de la source lumineuse du lecteur, qui éclaire l'objet/le code ; type de matériau des objets portant les codes ; lecteur fixe ou tenu manuellement. Mais cette valeur préréglée "par défaut" ne permet pas en pratique d'obtenir une image de bonne qualité dès la première prise d'image, car il y a trop de facteurs extérieurs liés à l'ergonomie du lecteur qui empêchent une maitrise complète des conditions réelles de prise de vue. L'ergonomie du lecteur définit comment il va être utilisé. Par exemple, le lecteur peut être fixe, et le code cible est amené manuellement ou mécaniquement devant le lecteur ; ou bien le lecteur est portatif, c'est-à-dire manipulé (à la main) ou porté (au bras, à la tête...) par un opérateur. L'environnement dans lequel le lecteur opère peut être avec un éclairage ambiant naturel ou artificiel. L'objet lui-même (caractère plus ou moins réfléchissant de la surface présentant le code) ou la façon dont il est présenté (distance, angle de présentation) sont autant de facteurs qui peuvent également influer sur la quantité de lumière que pourra recueillir le capteur. Aussi, lorsque le capteur va être déclenché, il va appliquer des paramètres de prise de vue qui ne seront pas nécessairement adaptés aux conditions de la prise de vue du code cible, au moment du déclenchement.

Pour ces raisons, une boucle itérative de prise d'images pilotée par le système externe de reconnaissance de code est utilisée dans le but d'adapter les paramètres de prise de vue et spécialement le temps d'exposition des pixels, aux conditions réelles. Cette boucle se déroule ainsi : après déclenchement, le capteur se met à acquérir des images du code cible, périodiquement, qu'il transmet au système externe. Pour chaque prise d'image, il applique les valeurs courantes des paramètres fournies par le registre de prise de vue du capteur, ce qui définit notamment la valeur du temps d'exposition. De son côté, le système reçoit les images, et à chaque image reçue, si il juge sa qualité non satisfaisante pour permettre le décodage du code, c'est-à-dire que l'image n'est pas assez bien exposée, le système externe détermine et transmet une nouvelle valeur de temps d'exposition, qui est mémorisée dans le registre de paramètres de prise de vue du capteur dans le but d'obtenir une nouvelle image, qui devrait être mieux exposée. Cette valeur ne sera prise en compte par le capteur que pour la prochaine prise d'image. Cette boucle itérative d'acquisition et fourniture dure jusqu'à ce que le système valide la qualité de l'image et décode le code avec succès.

La détermination d'une nouvelle valeur de temps d'exposition par le système externe utilise un ou des algorithmes qui exploitent l'histogramme de l'image, c'est à dire la répartition des pixels par niveaux de gris de l'image (ou la densité de probabilité, si l'histogramme est normalisé). Si on a 256 niveaux de gris codés dans l'image, l'histogramme indique combien de pixels ont la valeur 0, 1, jusqu'à 255.

Le système externe calcule donc l'histogramme de l'image reçue ; en se basant sur la valeur courante du temps d'exposition, et sur le gain de la chaine de lecture des pixels (mais ce gain est généralement fixé à 1 pour ce type d'application), qui sont des valeurs fournies par le capteur avec les données d'image, il détermine le cas échéant une nouvelle valeur de temps d'exposition par comparaison d'une ou plusieurs valeurs caractéristiques de l'histogramme (valeur moyenne, pourcentage de pixels ayant une valeur inférieure à un niveau de gris donné, pourcentage de pixels saturés, etc.) obtenu, à des valeurs de référence. La nouvelle valeur de temps d'exposition ainsi déterminée sera plus faible que la valeur courante, si l'image était surexposée, et au contraire plus grande si l'image était sous-exposée.

### PROBLEME TECHNIQUE

En pratique, compte-tenu des temps d'acquisition et fourniture des images au système externe, du temps de détermination et écriture dans le capteur d'une nouvelle valeur de temps d'exposition, la nouvelle valeur de temps d'exposition imposée par le système externe à partir des données d'une première image fournie par le capteur, ne sera effectivement appliquée qu'au mieux pour la troisième voire la quatrième prise d'image qui suit la première prise d'image ; le système doit encore vérifier la qualité de cette troisième ou quatrième image, et ensuite seulement, si cette qualité est bonne, effectuer le décodage du code.

Cette boucle de détermination externe, itérative, d'un temps d'exposition adapté pour l'acquisition du code cible courant induit un temps de réponse du lecteur de code qui est non négligeable, correspondant au temps de réception d'au moins trois ou quatre images. Il s'ensuit un temps de réponse trop lent du lecteur, entre le moment de son déclenchement et le décodage. Cette lenteur, perceptible, dégrade l'ergonomie du lecteur pour l'opérateur et la consommation du système augmente avec le nombre d'images qui sont prises : consommation du capteur, et aussi de la source d'éclairage (nombre de flash des Leds).

La demande de brevet EP 1 791 074 propose de déterminer un temps d'exposition optimal pour la prise d'image de code barre, en faisant varier le temps d'exposition d'une zone de matrice couvrant un ensemble de rangées à une autre, dans un contexte de mode d'exposition glissant (rolling). On a une première prise d'Image dite de recherche, appliquant en mode "rolling", 5 temps d'exposition différents sur 5 zones d'image, et des calculs statistiques dans chaque zone d'image de recherche sont faits pour discriminer les zones et déterminer le meilleur temps d'exposition, ou extrapoler d'après les deux meilleurs temps d'exposition. Le temps d'exposition ainsi déterminé est alors utilisé pour une nouvelle prise d'image, qui est l'image fournie en sortie. Le procédé présente comme inconvénient de nécessiter deux prises d'image complète, et de faire comparer des statistiques qui sont calculées sur des zones d'image différentes.

### RESUME DE L'INVENTION

L'invention propose une autre technique de détermination du temps d'exposition optimal pour la prise d'une image de code cible par un lecteur de code à capteur CMOS, qui améliore à la fois le temps de réponse et la qualité de l'image fournie en sortie.

La solution technique à la base de la présente invention, est un procédé d'acquisition d'image d'un code cible qui permet au capteur, après déclenchement du lecteur pour l'acquisition du code cible, de déterminer rapidement et en interne ("on-chip"), une valeur souhaitable de temps d'exposition pour la prise d'image de ce code au moyen d'un mode de mesure préalable à la prise d'image nominale, qui effectue une acquisition rapide de données d'image pour au moins deux valeurs différentes de temps d'exposition distribuées périodiquement selon les rangées ou selon les colonnes de la matrice, et les données d'image obtenues pour ces différentes valeurs de temps d'exposition ne servent qu'au capteur et que pour définir rapidement la valeur souhaitable de temps d'exposition. Cette valeur est alors utilisée pour effectuer une prise d'image nominale, et l'image obtenue est celle délivrée en sortie, pour décodage/reconnaissance de code. Le temps de réponse du lecteur de code utilisant un tel capteur est significativement réduit. Il est principalement égal au temps d'acquisition rapide de données d'image pour la détermination de la valeur de temps souhaitable, ajouté au temps d'acquisition et de fourniture en sortie, d'une unique image nominale. Par ailleurs, les différentes valeurs de temps d'exposition étant distribuées de manière périodique, selon les rangées ou bien selon les colonnes, la détermination du temps d'exposition nominal est établie sur la base de statistiques calculées sur des données issues de pixels répartis régulièrement sur l'ensemble de l'image. C'est-à-dire que ces données de l'image de mesure ont une bonne homogénéité spatiale (sous-échantillonnage) et une bonne homogénéité temporelle (Ti) favorables à une détermination optimale du temps d'exposition souhaitable.

Cette double homogénéité spatiale et temporelle est favorisée en choisissant une distribution des différents temps d'exposition en combinaison avec un sous-échantillonnage en fonction des rangées, dans la phase de lecture rapide de l'image de mesure.

Le procédé de l'invention permet donc d'améliorer de façon perceptible l'ergonomie du lecteur de code et de réduire sa consommation.

L'invention concerne donc un procédé d'acquisition d'une image de code(s) lisible(s) optiquement par un capteur d'image électronique de type CMOS, activé sur réception par le capteur d'un signal de déclenchement externe et comprenant une prise d'image de mesure pour déterminer une valeur de temps d'exposition souhaitable, ladite valeur de temps d'exposition souhaitable étant appliquée ensuite comme valeur de temps d'exposition courante pour tous les pixels de la matrice, pour réaliser une prise d'image nominale, caractérisé en ce que la prise d'image de mesure comprend :
- une phase d'intégration commune aux pixels, appliquant k différentes valeurs de temps d'exposition des pixels distribuées de façon régulière selon les rangées ou les colonnes de la matrice, chaque pixel étant associé à une valeur de temps d'exposition parmi k, k entier au moins égal à 2 ;
- une phase d'acquisition rapide de données numériques d'image pour les différentes valeurs de temps d'exposition des pixels, comprenant une phase de lecture rapide par sous-échantillonnage des rangées de la matrice ; et
- une phase de détermination de la valeur de temps d'exposition souhaitable par comparaison d'histogrammes calculés sur la base des données numériques d'image obtenues dans la phase d'acquisition rapide pour chaque valeur différente de temps d'exposition.

Selon un aspect de l'invention, les k valeurs de temps d'exposition sont distribuées selon un motif périodique sur les colonnes de la matrice.

Selon un aspect de l'invention, le sous-échantillonnage des rangées est dans un rapport 1 sur 8, 16 ou 32.

Selon un autre aspect de l'invention, les histogrammes pour les différentes valeurs de temps d'exposition du mode de mesure sont calculés sur un nombre de niveaux de gris inférieur au nombre de niveaux de gris correspondant à la résolution des moyens de conversion analogique numérique en mode de mesure.

D'autres caractéristiques et avantages de l'invention sont présentés dans la description suivante, en référence aux dessins annexés dans lesquels :
- la figure 1 illustre schématiquement un lecteur de code portable ;
- la figure 2 est un schéma simplifié d'une architecture de capteur CMOS d'un lecteur de code de l'état de l'art, adapté à la mise en oeuvre d'un procédé selon l'invention ;
- la figure 3 illustre une variante de schéma de commande des pixels de la matrice de la figure 2 ;
- la figure 4 est un organigramme général d'un procédé d'acquisition d'image dans un capteur de lecteur de code barre selon l'invention ;
- la figure 5 est un organigramme plus détaillé de l'étape de mesure rapide du procédé d'acquisition selon l'invention ;
- la figure 6 représente différents histogrammes d'image, correspondant à différents temps d'exposition des pixels à la lumière;
- la figure 7 illustre un exemple de distribution de valeurs de temps d'exposition différentes selon les colonnes de la matrice de pixels ;
- la figure 8 illustre un autre exemple de distribution de valeurs de temps d'exposition différentes selon les rangées de la matrice de pixels ; et
- les figures 9 à 11 illustrent des exemples de définition de zones d'intérêt dans la matrice pour le mode de mesure.

### DESCRIPTION DETAILLEE

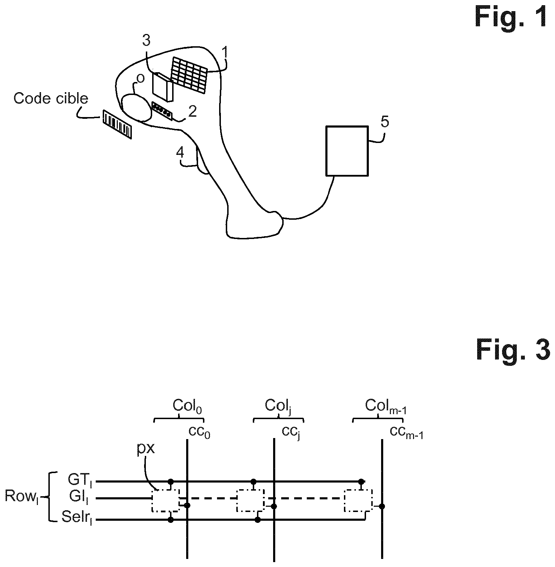

L'invention concerne les lecteurs de code à capteur CMOS, aussi bien ceux qui sont fixes, comme ceux intégrés aux caisses automatiques de supermarché, que ceux qui sont portables et actionnés par un opérateur. Un lecteur de code, portable dans l'exemple, est illustré sur la figure 1. Il comprend un capteur électronique de type CMOS 1, à matrice de pixels actifs, une source de lumière 2 pour éclairer la cible (le code apposé sur un objet) à travers une fenêtre de numérisation o ; un système optique 3 prévu pour renvoyer la lumière réfléchie par la cible sur la matrice de pixels du capteur. Dans les systèmes actuels, la source lumineuse utilise généralement des diodes LEDs pour éclairer la cible pour la prise d'image, par flash. Certains systèmes peuvent en outre intégrer une source laser associée à une optique diffractive, dans le but d'aider l'opérateur centrer le code cible préalablement à la prise d'image, par projection d'un motif particulier (croix, angles,...etc.). Cette opération est connue sous le terme anglo-saxon *"aimer".* Cette source laser est normalement éteinte, avant le flash des LEDs pour la prise d'image.

Le lecteur portable est muni d'une gâchette 4 ou d'un mécanisme équivalent, manuel ou non, de déclenchement du lecteur. Lorsque ce mécanisme est activé, un signal de déclenchement Trig sort le lecteur d'un mode de veille basse consommation, la source de lumière est activée et le capteur également, pour acquérir et fournir une image du code cible à un système externe 5 de traitement numérique de données qui assure le décodage du code. L'image est fournie au système de traitement 5 sous forme d'un flux de données (numériques) par un câble de transmission, par exemple un câble USB, ou par un moyen de transmission sans fil. Si le lecteur est fixe, le signal Trig de déclenchement est par exemple généré par un système de détection de présence intégré au lecteur.

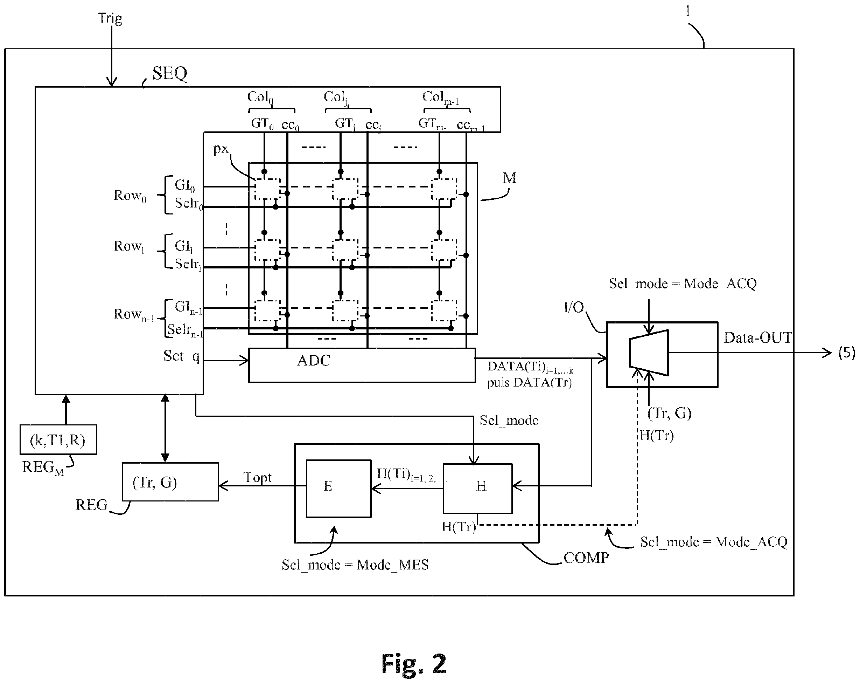

Le capteur CMOS comprend classiquement, comme représenté à la figure 2, une matrice M de n rangées Row₀ à Rowₙ₋₁ et m colonnes Col₀ à Colₘ₋₁ de pixels actifs (n, m entiers), un circuit ADC de lecture à convertisseur(s) analogique numérique, un circuit COMP de traitement numérique apte à effectuer des calculs sur les données d'image fournies par le circuit de lecture et notamment calculer un histogramme et un circuit I/O d'interface pour fournir les données d'image au système externe 5. Ces différents circuits sont pilotés par un circuit de séquencement du capteur, SEQ, qui fournit les différents signaux de commande nécessaires pour réaliser une prise d'image. En particulier le circuit de séquencement fournit les signaux de commande des transistors des pixels actifs.

Pour les besoins de la description, rappelons qu'une structure de pixel actif, à transistors, des capteurs CMOS, comprend généralement au moins :
- un transistor d'initialisation qui permet d'évacuer toutes les charges accumulées dans l'élément photosensible vers un drain d'évacuation. La fin de l'impulsion d'initialisation fixe le point de départ de la durée d'exposition du pixel : à partir de ce point, l'élément photosensible peut (à nouveau) accumuler les charges générées par la lumière.
- un transistor de transfert qui permet de transférer toutes les charges accumulées par l'élément photosensible vers un nœud de stockage, qui peut être le nœud de lecture du pixel ou un nœud de stockage provisoire. La fin de l'impulsion de transfert fixe la fin de la durée d'exposition du pixel, pour la prise d'image en cours.
- un transistor de remise à zéro du nœud de lecture du pixel,
- un transistor monté en suiveur dont la grille est reliée au nœud de lecture, associé à un transistor de sélection du pixel connecté entre la source du transistor suiveur et un conducteur de colonne qui permettent la conversion des charges stockées dans le nœud de lecture, en un niveau de tension analogique correspondant sur le conducteur de colonne relié à un circuit de conversion analogique numérique.

Sans qu'il soit utile pour les besoins de l'invention de rentrer plus dans les détails, on sait bien qu'une structure de pixel actif peut comprendre d'autres transistors que les quatre transistors ci-dessus, selon que sont prévus un nœud de stockage temporaire, distinct du nœud de lecture, ou un étage de gain, etc. Egalement certains transistors peuvent être partagés entre plusieurs pixels.

Dans l'invention, on utilise plus spécialement le contrôle électronique du temps d'exposition des pixels actifs, via les transistors (grilles) d'initialisation et transfert, pour mettre en œuvre dans et par le capteur, un mode de mesure permettant de déterminer une valeur souhaitable de temps d'exposition Topt pour l'acquisition d'une image d'un code cible, en préalable à une prise d'image nominale du code cible effectuée de manière habituelle, mais avec la valeur Topt.

Le mode de mesure utilise donc les possibilités de réglage de la durée d'exposition d'un pixel actif, pour appliquer différentes valeurs de temps d'exposition aux pixels. Ceci peut être obtenu en jouant sur la commande (de grille) du transistor d'initialisation qui règle le début de la durée d'exposition et/ou sur la commande (de grille) du transistor de transfert sur le nœud de stockage associé (qui peut être ou pas le nœud de lecture) qui en règle la fin, en tenant compte du ou des modes de capture mis en œuvre dans le capteur et de la topologie des lignes de commande. On rappelle qu'un capteur Cmos peut proposer un ou deux modes de capture, globale ou en décalé. Dans le mode de capture d'image globale, dit "global shutter" ou "snapshot", tous les pixels intègrent en même temps : la phase d'exposition débute en même temps pour tous les pixels et elle se termine en même temps pour tous les pixels également. La phase de lecture, rangée après rangée, commence ensuite. Ce mode de capture globale est privilégié pour les applications hautes performances (ex vitesse) car elle permet de figer l'image et d'éviter les distorsions inhérentes au mode décalé qui peuvent dégrader la qualité d'image en particulier si l'objet bouge. Dans le mode de capture en décalé (ou glissant) dit "rolling shutter", les rangées intègrent successivement de manière décalée : le début de la phase d'exposition est défini pour chaque rangée de pixels et décalé d'une rangée à la suivante et le temps d'exposition dans une rangée de pixels ne débute que lorsque la lecture de la rangée de pixels précédente est terminée. Le mode de capture globale est privilégié pour les applications hautes performances (ex vitesse) car il permet de figer l'image et d'éviter les distorsions inhérentes au mode de capture en décalé qui peut dégrader la qualité d'image en particulier si l'objet bouge.

La topologie des lignes de commande répond à différentes contraintes telles que : nombre de transistors, pixels à transistors partagés ou non, mode de capture globale et/ ou en décalé; optimisation du taux d'ouverture des pixels. Par exemple, la topologie des lignes de commande présentée à la figure 2 qui permet un contrôle de la fin de durée d'exposition par colonne, est adaptée à un mode de capture globale ; tandis que la topologie présentée à la figure 3 qui permet un contrôle du début et de la fin de durée d'exposition par rangée permet les deux types de capture. Ces topologies seront détaillées plus loin.

Dans tous les cas, le circuit de séquencement SEQ permet de générer les signaux de commande des pixels et des autres circuits du capteur (convertisseurs, interface de sortie,...) avec un timing pixel ad hoc pour le ou les modes de capture et la topologie implémentés. Pour plus de détails sur comment un circuit de séquencement peut assurer ce pilotage avec une grande souplesse par programmation mémoire, on pourra par exemple de référer à la demande EP3058719.

Ces rappels généraux étant faits, nous allons pouvoir décrire le procédé d'acquisition d'image d'un code cible proposé dans l'invention. Ce procédé, déclenché par l'activation du signal Trig, permet la fourniture par le capteur 1 d'une seule image de qualité nominale directement exploitable par le système 5 de traitement pour décodage/reconnaissance du code, car elle a été obtenue en appliquant à la matrice de pixels une valeur de temps d'exposition, pour l'intégration de la lumière, qui a été déterminée en interne par le capteur lui-même (*"on-chip"*)*,* dans un mode de mesure activé avant le mode d'acquisition nominale, sur la base d'histogrammes calculés à partir d'au moins une image de mesure de qualité dégradée et pour au moins deux valeurs de temps d'exposition différentes.

Par "qualité dégradée", on veut dire que le nombre de pixels de l'image de mesure est inférieur au nombre de pixels de l'image de qualité nominale : autrement dit, on sous-échantillonne la matrice de pixels ; et/ou que la résolution de la mesure (lecture) de la quantité de lumière intégrée par un pixel est inférieure dans le mode de mesure à celle du mode d'acquisition nominale : autrement dit, la conversion analogique numérique des niveaux de lumières lus sur les pixels fournit un résultat qui est codé sur moins de niveaux de gris dans le mode de mesure que dans le mode d'acquisition nominale. Par exemple si dans la conversion pour l'image nominale est faite sur 10 ou 12 bits, pour l'image de mesure, la conversion est faite de préférence sur 8 bits, voire sur 4 bits.

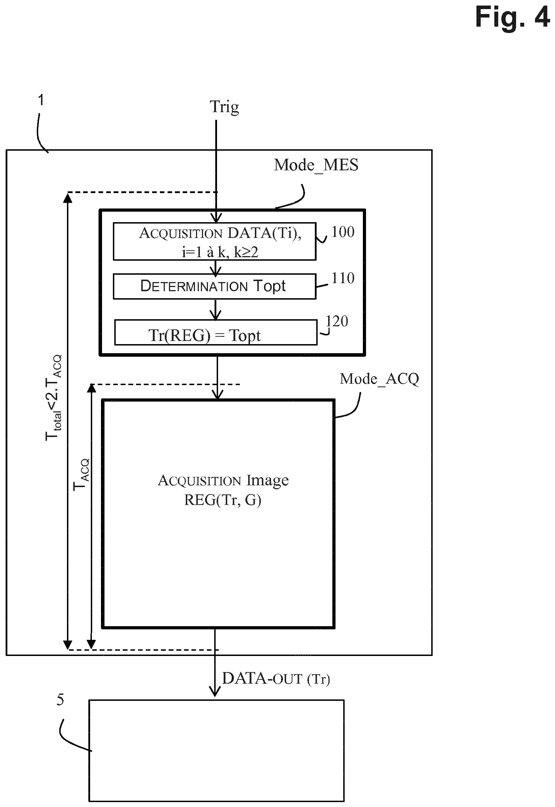

La figure 4 présente un organigramme général d'un procédé d'acquisition d'un code cible selon une première mise en œuvre de l'invention, avec un mode de mesure Mode_MES déclenché par le signal Trig qui prévoit une seule prise d'image de mesure pour laquelle chaque pixel est associé à une valeur de temps d'exposition parmi k valeurs de temps d'exposition différentes T1 à Tk, k entier au moins égal à deux. Le mode de mesure comprend principalement trois phases pilotées par le circuit de séquencement du capteur : une phase 100 d'acquisition, rapide, de données d'image DATA(Ti) pour chacune des k valeurs de temps d'exposition ; puis une phase 110 de détermination par le circuit de traitement numérique COMP du capteur à partir des données d'image DATA(Ti), d'une valeur de temps d'exposition souhaitable Topt pour la prise d'image du code cible concerné : ni trop grande, pour ne pas avoir trop de pixels saturés, ni trop faible, pour ne pas perdre de signal (pixels noirs), suivant des critères de qualité d'image établis pour un décodage efficient du code ; et une phase de stockage 120 de la valeur Topt dans le champ correspondant Tr du registre de paramètres de prise de vue REG du capteur.

Le procédé active alors le mode d'acquisition nominale Mode_ACQ, qui utilise les valeurs courantes des paramètres du registre REG, notamment le paramètre Tr. Ce registre peut fixer d'autres paramètres comme une valeur G de gain de conversion, mais dans les applications de lecteur de code pour lesquelles on ne cherche pas à reconstruire une image avec précision, mais à décoder un code, ce gain est généralement fixé à 1. Une image de qualité optimale (pour le décodage de code) est obtenue : les données d'image correspondantes Data-OUT obtenues avec la valeur Tr de temps d'exposition sont lues sur les pixels de la matrice (image complète) et transmises au système externe de traitement 5. Généralement, les valeurs des paramètres du registre REG (Tr, G) sont également fournies avec ces données, auxquelles peuvent également s'ajouter les données de l'histogramme H(Tr) calculées par le circuit de traitement numérique sur ces données DataOUT. Cette phase d'acquisition nominale par le capteur correspond ainsi au mode d'acquisition et fourniture d'une image complète habituel, à l'exception du fait que la valeur de temps d'exposition Tr appliquée, fournie par le registre de paramètres de prise de vue du capteur, est une valeur qui a été autodéterminée par le capteur lui-même lors de la phase de mesure Mode_MES précédente.

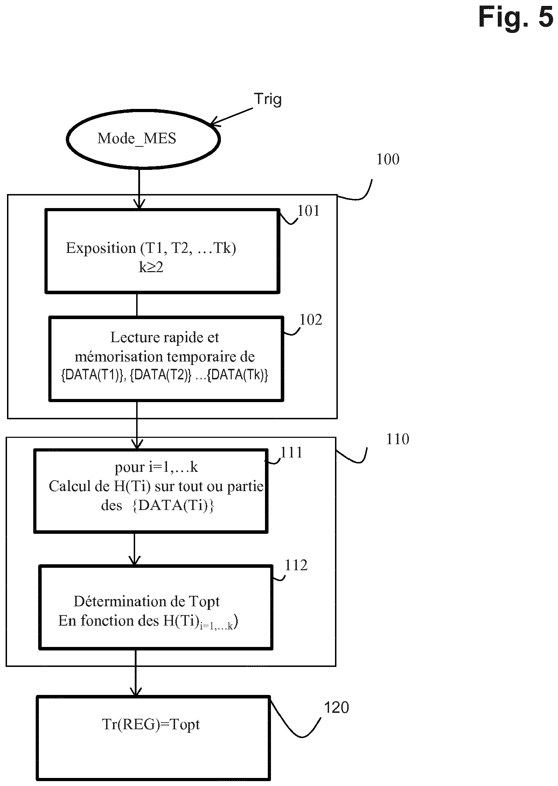

La phase d'acquisition rapide 100 du mode de mesure est illustrée plus en détail à la figure 5. Il s'agit d'acquérir rapidement des données d'image pour k valeurs de temps d'exposition Ti, pour calculer la valeur Topt, dans un temps T_{MES} inférieur au temps de fourniture d'une image nominale T_{ACQ}, en sorte que le temps total Tₜₒₜₐₗ du procédé d'acquisition selon l'invention permettant de fournir une image nominale pour décodage au système externe 5, soit inférieure à 2 xT_{ACQ}. De préférence on vise à avoir T_{MES}≤10%T_{ACQ}.

Selon une mise en œuvre préférée, on fait l'acquisition des données d'image pour les k valeurs Ti en une seule prise, en distribuant périodiquement les k valeurs Ti sur la matrice de pixels. La phase d'acquisition rapide 100 comprend ainsi une phase 101 d'exposition des pixels, qui associe à chaque pixel de la matrice, une valeur de temps d'exposition déterminée, parmi les k valeurs Ti ; suivie d'une phase 102 de lecture rapide des pixels.

Le motif de distribution des Ti prend en compte la façon dont sont implémentées les lignes de commande des transistors (grilles) d'initialisation et de transfert des pixels dans le capteur (aspect topologique) et du ou des modes de capture implémentés dans le capteur.

On a déjà expliqué comment les séquences d'exposition et lecture des rangées de pixels de la matrice seront pilotées (différemment) selon le mode de commande de capture d'image chois (globale ou en décalé).

Voyons plus précisément l'aspect topologique. En général, pour limiter le nombre de conducteurs et favoriser l'ouverture des pixels, les commandes des grilles d'initialisation et transfert sont communes aux pixels d'une même rangée ou d'une même colonne.

Dans l'exemple illustré à la figure 2, la commande des grilles d'initialisation qui règlent le début de la durée d'exposition, est commune aux pixels d'une même rangée de la matrice ; et la commande des grilles de transfert, qui règlent la fin de la durée d'exposition, est commune aux pixels d'une même colonne de la matrice.

Plus précisément la matrice comprend n rangées de pixels Row₀ à Rowₙ₋₁ et m colonnes de pixels Col₀ à Colₘ₋₁ (n, m entiers) et on a :
- n lignes de commande de grille d'initialisation GIₗ, pour l égal de 0 à n-1, chacune s'étendant parallèlement (dans l'exemple horizontalement) à la rangée de pixels correspondante ;
- m lignes de commande de grilles de transfert GTⱼ, pour j égal de 0 à m-1, chacune s'étendant parallèlement (dans l'exemple verticalement) à la colonne de pixels correspondante ; et
- n lignes de commande de sélection de rangée selrₗ, pour l égal 0 à n-1, chacune s'étendant parallèlement (dans l'exemple horizontalement) à la rangée de pixels correspondante pour commander la grille du transistor de sélection des pixels de la rangée.

Les lignes de commande des autres transistors des pixels ne sont pas représentées sur la figure 2 pour ne pas surcharger inutilement le dessin.

Cette topologie qui prévoit un contrôle de la fin d'exposition des pixels par colonne et une lecture en ligne (par rangée de pixels), permet un mode de capture globale. Elle n'est pas applicable à un mode de capture en décalé, dans lequel la phase d'exposition d'une rangée de pixels ne débute que lorsque la lecture de la rangée de pixels précédente est terminée.

La figure 3 illustre une autre topologie qui permet les deux modes de capture : la commande des grilles d'initialisation et la commande des grilles de transfert sont toutes les deux communes aux pixels d'une même rangée de la matrice. Les lignes de commande de transfert GTₗ, l égal de 0 à n-1, s'étendent donc parallèlement (dans l'exemple horizontalement) à la rangée de pixels correspondante, comme les lignes de commande d'initialisation GIₗ.

D'autres topologies de capteur peuvent appliquer d'autres schémas de commande. Par exemple la commande des grilles d'initialisation de début de temps d'exposition pourrait être commune aux pixels d'une même colonne de la matrice ; la sélection des pixels pour la lecture pourrait se faire par colonne, etc. Selon la topologie, un ou les deux modes de commande (global, en décalé) sont applicables.

On va maintenant illustrer par des exemples comment les aspects topologiques et de mode de capture sont pris en compte pour définir des motifs de distribution des valeurs Ti sur la matrice, permettant l'acquisition des données d'image pour les k valeurs Ti de temps d'exposition en une seule prise. Il sera généralement plus simple et avantageux de distribuer les k valeurs Ti selon une seule direction de la matrice, en ne jouant que sur une seule ligne de commande, initialisation ou transfert. Egalement, dans le but d'avoir des informations homogènes sur l'ensemble de la matrice pour les différentes valeurs Ti, la distribution des valeurs Ti est avantageusement périodique.

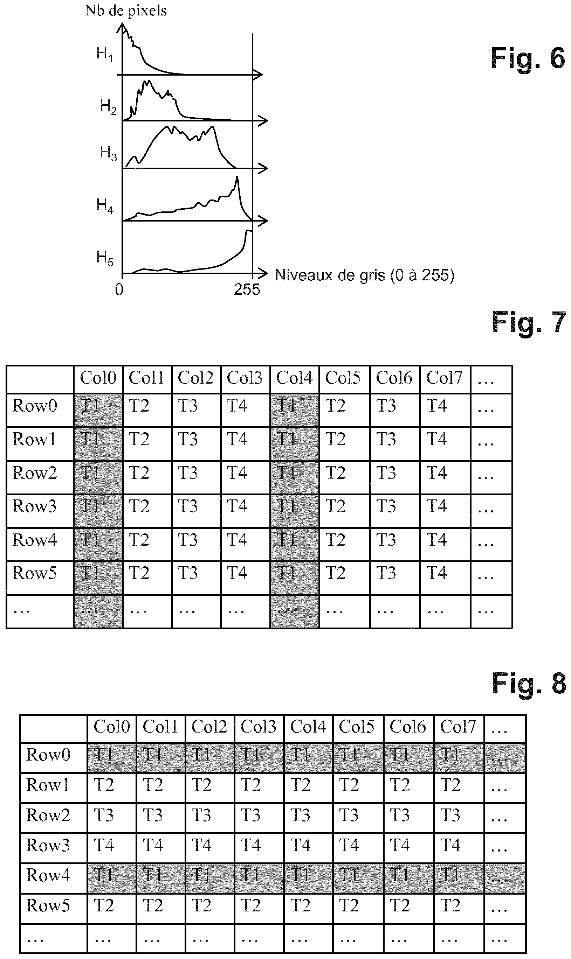

La figure 7 illustre un premier exemple d'un motif de distribution des valeurs Ti, i=1 à k, pour k=4, sur la matrice de pixels pour la topologie de la figure 2 pour un mode de capture globale. Dans ce motif, les valeurs Ti sont distribuées selon les rangs des colonnes, régulièrement (périodiquement) dans l'exemple : T1 sur les colonnes de rang 0, 4, 8, etc., ..., T2 sur les colonnes de rang 1, 5, 9, etc., T3 sur les colonnes de rang 2, 6, 10, etc. et T4 sur les colonnes de rang 3, 7, 11, etc. Une phase d'acquisition des données d'image pour les k valeurs Ti d'exposition se déroule alors comme suit : la phase d'exposition débute pour toutes les rangées de pixels en même temps (signaux GIₗ activés en même temps) et le séquenceur commande les signaux GTⱼ de commande de fin d'exposition en fonction du rang j de la colonne selon le motif défini (Figure 7). La phase de lecture en ligne peut débuter après la fin de la phase d'exposition de la matrice, calée sur la durée d'exposition la plus longue, T4 en l'occurrence.

La figure 8 montre un autre motif de distribution applicable à une matrice de pixels ayant la topologie de la figure 3, qui permet au séquenceur de jouer sur le début de la durée d'exposition (lignes de commande GIₗ) pour régler la durée d'exposition de chaque rangée et le reste du timing (fin d'exposition, lecture) qui dépend du mode de capture global ou en décalé, n'est pas bousculé par ce "jeu". Plus explicitement, les rangées commandées avec une durée d'exposition plus longue auront leur commande de grille d'initialisation activée relativement plus tôt et les rangées commandées avec une durée d'exposition plus courte auront leur commande de grille d'initialisation activée relativement plus tard. Dans l'exemple de la figure 8 la valeur T1 est appliquée sur les rangées de rang 0, 4, 8,...; la valeur T2, sur les rangées de rang 1, 5, 9,...etc.

Ainsi, en fonction de la topologie des lignes de commande du capteur considéré, qui peut être celle de la figure 2, de la figure 3, ou une autre topologie, on sait définir un motif de distribution des différents temps d'exposition selon les rangées ou les colonnes de la matrice, de préférence périodique et le circuit de séquencement SEQ du capteur (Figure 2) est configuré (programmé) pour fournir les signaux de commande des pixels correspondant à ce motif et au mode de capture du capteur, pour piloter les différentes phases du mode de mesure.

Concernant le nombre k de valeurs Ti de temps d'exposition, il peut être avantageux d'utiliser seulement deux valeurs différentes T1 et T2 (k=2), car on sait implémenter cela de façon simple dans le séquenceur, selon la parité de l'adresse de rangée ou de colonne : pair (T1) ou impair (T2). Dans ce cas on choisit deux valeurs T1 et T2 assez éloignées, correspondant respectivement à un fort et un faible éclairement, par exemple 100 microsecondes et 1 milliseconde.

Mais on choisira k au moins égal à 3 ou 4 pour couvrir une large gamme de conditions d'éclairement (faible à fort) et améliorer la fiabilité et l'efficacité de la détermination de la valeur Topt pour des conditions opérationnelles variables, par exemple : en extérieur, avec des objets à analyser très réfléchissants (ex canette métallique) ou très absorbants (papier sombre). Les k valeurs Ti seront alors avantageusement choisies avec un ratio R constant entre une valeur et la suivante, pour faciliter les calculs et avoir les mêmes contraintes sur les histogrammes. Dans un exemple numérique, on choisira par exemple k=4 et T1=8µs, T2=40µs, T3=200µs, T4=1ms avec un ratio constant de 5 entre elles (T2=5.T1, T3=5.T2, T4=5.T3).

En pratique les valeurs Ti sont choisies en fonction des contraintes et possibilités du séquenceur. Par exemple un temps de référence habituel des séquenceurs pour la gestion des signaux, est la durée d'un cycle de lecture d'une rangée (appelé temps ligne), en mode nominal (pleine résolution), qui est de l'ordre de 10 microsecondes pour les technologies courantes. Mais les séquenceurs récents permettent de descendre à des temps de référence inférieurs, 1 à 2 microsecondes. On peut prévoir dans le capteur un registre de paramètres REG_{M} (Figure 2) pour le mode de mesure de l'invention, programmable, pour stocker les valeurs de k, du temps d'exposition le plus petit (T1) et du ratio R.

Après la phase d'exposition 102 (de chaque rangée, pour le mode de capture décalé, de toutes les rangées, pour le mode de capture globale), il faut lire les pixels, pour obtenir les données d'image correspondantes, pour chacune des différentes valeurs de temps d'exposition. C'est la phase de lecture rapide 102 du mode de mesure (figure 4). Cette phase de lecture rapide répond à la contrainte liée à la résolution du problème technique exposé, à savoir faire une autodétermination par le capteur lui-même de la valeur souhaitable de temps d'exposition Topt rapidement, dans un temps inférieur au temps d'acquisition T_{ACQ} d'une image complète, en mode nominal. On vise en pratique de faire cette détermination de Topt, c'est-à-dire l'acquisition de l'image de mesure (exposition aux Ti et lecture, calculs et stockage de Topt) dans un temps de l'ordre de 10% (ou moins) du temps T_{ACQ}, et c'est bien la lecture des données d'image, et plus précisément le temps de conversion des données et la quantité de données à acquérir et transmettre au circuit de traitement numérique COMP qui est critique.

La phase de lecture rapide 102 utilise l'une et ou l'autre des deux mesures décrites ci-après.

La première mesure est de ne pas lire tous les pixels de la matrice. On a pu vérifier que l'on n'avait pas besoin d'histogrammes calculés avec les données de la matrice complète pour déterminer efficacement la valeur Topt, mais les données d'image doivent représenter les différentes valeurs Ti appliquées et permettre une bonne analyse de l'exposition. On propose donc un sous-échantillonnage de la matrice, mais la sélection des pixels à lire doit permettre de couvrir les différentes valeurs de temps d'exposition. C'est-à-dire que la sélection des pixels échantillonnés tient compte à la fois de la façon dont les pixels sont sélectionnés en lecture c'est à dire de la topologie du capteur, et du motif de distribution des Ti sur la matrice.

En général, et cela correspond aux figures 2 et 3, la lecture se fait par rangée (lignes de sélection de rangée selrₗ), et simultanément pour les m pixels de la rangée sélectionnée, via les m conducteurs de colonne (cc₀,...ccₘ₋₁) reliés aux moyens de conversion analogique numérique ADC qui fournissent les m valeurs numériques correspondantes.

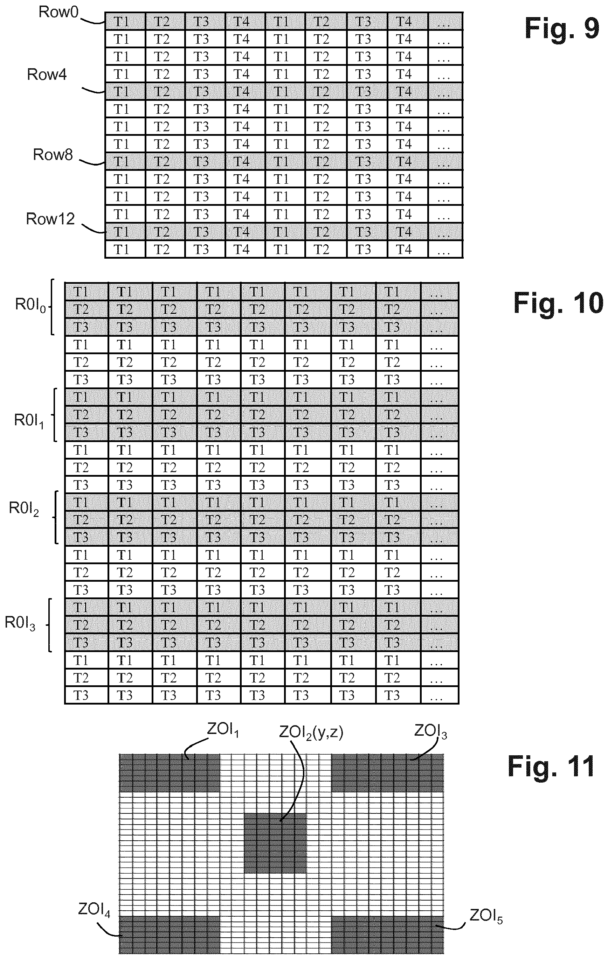

Si on reprend le schéma de la figure 7, qui distribue les différentes valeurs Ti, i=1 à k en fonction du rang des colonnes, on peut ainsi choisir de n'échantillonner qu'une rangée sur N. La figure 9 montre cela pour N=4 pour des raisons évidentes de simplicité de représentation, mais N sera de préférence égal à 8, 16 ou 32. Dans chaque rangée, on aura des données correspondant à chacune des k valeurs de temps d'exposition appliqués Ti. Et l'ensemble des rangées échantillonnées couvre de manière homogène l'étendue d'image. Au final, comme on connait d'une part comment les valeurs Ti sont distribuées, c'est-à-dire dans l'exemple sur quelles colonnes (ce sont des données de configuration du circuit de séquencement du capteur), pour chaque rangée échantillonnée, on sait associer pour chaque pixel, la donnée lue à une valeur d'exposition Ti. C'est-à-dire que l'on sait constituer pour chaque valeur Ti, l'ensemble de données {DATA(Ti)} qui va permettre de calculer l'histogramme correspondant H(Ti), sur tout ou partie des niveaux de gris codés par le mode de résolution réduite comme expliqué supra. A noter que cet exemple de distribution périodique verticale des valeurs Ti (selon le rang des colonnes) de la figure 7, combiné à un sous-échantillonnage horizontal (1 rangée sur N), donc également périodique, permet en pratique d'obtenir des données avec une bonne homogénéité spatiale (sous-échantillonnage) et aussi une bonne homogénéité temporelle (Ti) sur l'image de mesure, pour l'analyse de l'exposition d'image et la détermination de Topt.

Pour le motif de distribution des valeurs Ti de la figure 8, en fonction du rang des rangées, il faut appliquer une définition du sous-échantillonnage en ligne différent, car chaque rangée ne peut fournir que des données qui correspondent à une seule valeur de temps d'exposition. Généralement, comme illustré sur la figure 8, les k valeurs Ti seront distribuées selon un motif périodique, pour une bonne homogénéité temporelle sur la matrice. On peut alors prévoit d'échantillonner k rangées consécutives toutes les X rangées, en gardant de préférence, à l'échelle de la matrice, un échantillonnage d'une rangée sur 8, 16 ou 32. La figure 10 illustre cela pour k=3. Cela revient à définir pour la lecture rapide 102, des ensembles de rangées consécutives ROI₀, ROI₁ ...etc.

Du fait de la lecture séquentielle, par rangée, le temps de lecture du mode de mesure est proportionnel au nombre total de rangées lues.

Pour optimiser encore la durée de la phase de mesure, on peut réduire le temps de lecture d'image de mesure en ciblant une ou des zones d'intérêt dans la matrice, comme par exemple une zone centrale ZOI₂ ou les zones d'angles ZOI₁ ZOI₃, ZOI₄ et ZOI₅ illustrées sur la figure 11.

Ces zones sont définies en fonction de l'application et couvrent un ensemble de pixels contigus en nombre suffisant pour obtenir un ensemble homogène de données spatiales et temporelles permettant d'analyser l'exposition et de déterminer la valeur Topt avec une bonne efficacité. Dans ce cas, la phase de lecture rapide du mode de mesure applique un sous-échantillonnage horizontal uniquement sur la ou les zones cibles. Par exemple, si on définit une (1) zone d'intérêt pour le mode de mesure, qui couvre y rangées et z colonnes de la matrice, le circuit de lecture est configuré en mode de mesure pour échantillonner 1 rangée sur P sur la hauteur des y rangées avec P entier égal ou supérieur à 1 ; et pour chaque rangée échantillonnée, le circuit de lecture va conduire m conversions en parallèle, et seules les données d'image fournies par les pixels des z colonnes sont conservées pour être traitées par le circuit de traitement numérique qui établit la valeur souhaitable de temps d'exposition.

A noter que l'on peut également définir (en négatif) une ou des zones particulières de la matrice que l'on ne veut pas échantillonner, parce que l'on sait qu'elles peuvent être potentiellement sur-éclairées du fait d'un ciblage (parce que la source laser de ciblage sera restée allumée). Cela revient à définir des rangées (adresses) qui ne seront pas sélectionnées dans la phase de lecture rapide. Ainsi l'analyse de l'exposition de l'image de mesure ne sera pas perturbée par ces zones potentiellement sur-éclairées. En pratique, ces zones potentiellement sur-éclairées par le ciblage peuvent être sur les côtés, et notamment les angles (figure 11) ou bien au centre (dépend du viseur).

Dans un exemple pratique combinant les deux approches, avec un ciblage visant les côtés de la matrice, on exclura de préférence les zones d'angles pour ne garder qu'une zone centrale de la matrice définie pour l'analyse de l'exposition d'image du code cible. Dans un exemple numérique correspondant, pour un capteur de 1000x1000 pixels (1Mpixels), on peut définir une telle zone centrale d'intérêt ZOI₂ qui couvre les 250 rangées et 250 colonnes centrales. On gagne un facteur 4 sur le temps de lecture (250 rangées à lire sur les 1000 de la matrice complète). En y associant un sous-échantillonnage d'une rangée sur 8, on arrive à un facteur de réduction du temps de lecture de 32 (1/4 x 1/8 = 1/32), avec environ 30 rangées à lire sur les 1000 de la matrice. Si au contraire le ciblage vise le centre, on exclura de préférence une zone centrale et en mode de mesure, on fera de préférence l'acquisition dans les zones d'angle.

Une deuxième mesure pour la phase de lecture rapide 102, est la réduction de la résolution de la conversion analogique numérique. Par exemple, en réduisant la résolution de deux bits, on réduit d'un facteur 4 le temps de conversion. Cette mesure est facilement implémentée, au moyen d'un indicateur Set-q positionné par le séquenceur (figure 2) pour fixer la résolution du convertisseur. Dans l'invention, on prévoit que cet indicateur fixe pour le mode de mesure une résolution qui est différente, réduite, de celle du mode d'acquisition nominale.

La phase de lecture rapide 102 selon l'invention mettra de préférence en œuvre la mesure de sous-échantillonnage et la mesure de résolution réduite. Dans un exemple numérique, pour un capteur 10 bits de 2K X 1K (rangées X colonnes) à 100 images/secondes (10ms par image nominale), mettant en œuvre un mode de mesure pour déterminer Topt selon l'invention, qui combine un sous-échantillonnage d'une rangée sur M=16, à une résolution réduite à 8 bits (donc 2 bits de moins que le mode nominal), on gagne un facteur 16x4=64. Le temps d'acquisition de l'image (dégradée) de mesure passe à 10ms/64=156ps (meilleur que l'objectif de 10 % de T_{ACQ}).

Une fois la phase 102 de lecture rapide terminée, le mode de mesure passe dans la phase de détermination 110 de la valeur d'exposition souhaitable Topt pour le code cible concerné. Cette phase 110 est assurée par le circuit de traitement numérique COMP (figure 2) préalablement configuré en mode de mesure par le séquenceur via un signal indicateur de mode (Sel-mode).

Le circuit COMP commence par la phase 111 de calcul des histogrammes. Il dispose pour cela, pour chaque valeur de temps d'exposition, d'un ensemble de valeurs numériques {DATA(Ti)} lues sur la matrice. Chaque valeur correspond à un niveau de gris sur la plage de niveaux de gris codée par la conversion. Le calcul d'histogramme sur ces données (ou une partie de ces données correspondant à une sélection de niveaux de gris) donne la répartition des pixels selon les niveaux de gris pour cette valeur de temps d'exposition Ti : on mesure donc la plage de luminosité de l'image du code cible, pour ce temps d'exposition.

Pour ces calculs, on peut ne traiter que les données correspondant à une sélection de niveaux de gris déterminée parmi les niveaux de gris correspondant à la résolution du convertisseur en mode de mesure. Par exemple, si le mode de mesure applique une résolution réduite, par exemple 8 bits de résolution codant 256 niveaux de gris, on peut calculer les histogrammes pour seulement 8 ou 16 niveaux de gris (ou bins) sur les 256. On peut alors réduire l'espace mémoire nécessaire (mémoire RAM, registres) pour ces calculs d'histogrammes. A noter que dans ce cas, on aura avantage à combiner un tel calcul d'histogrammes sur 8 ou 16 bins à l'utilisation d'au moins 3 ou 4 valeurs différentes de temps d'exposition, avec un ratio constant R (entier) entre elles qui sera compris entre 5 et 10 (bornes incluses. On combine ainsi tous les avantages en termes de couverture d'ambiance lumineuse, espace mémoire et efficacité de la détermination.

Ensuite, on passe à la phase 112 de détermination du temps Topt, à partir des histogrammes calculés pour les différentes temps Ti.

On a représenté à la figure 6 différents histogrammes H₁ à H₅ calculés pour 256 niveaux de gris (256 classes ou bins) correspondant à différentes conditions d'exposition d'une image. Le premier histogramme H₁ en haut de la figure correspond à une image trop peu exposée, avec un pourcentage élevé de pixels noirs et une concentration des pixels sur les niveaux de gris les plus faibles. Le dernier histogramme H₅ en bas de la figure correspond au contraire à une image trop surexposée avec beaucoup de pixels saturés et une concentration des pixels sur les niveaux de gris les plus forts.

Pour un œil humain, l'histogramme à atteindre est celui du milieu H₃, qui est plutôt centré, sans ou avec très peu de pixels saturés (sur-exposés) et sans ou avec très peu de pixels noirs (sous-exposés). Mais pour un décodage de code par un système de traitement de données d'un lecteur de code, l'histogramme H₄ qui montre quelques pixels saturés, est tout à fait convenable.

Ainsi, à partir des histogrammes H(Ti) calculés dans la phase 111, on détermine dans la phase 112 une valeur de temps d'exposition Topt qui doit permettre d'obtenir ensuite, dans la phase d'acquisition d'image nominale, un histogramme qui ressemble à ces histogrammes H₃ ou H₄.

Supposons que l'histogramme H₅ corresponde à un temps d'exposition T5, Topt aura une valeur inférieure à T5, pour tendre vers une forme d'histogramme telle que H₃ ou H₄. Si l'histogramme H₁ correspond à un temps d'exposition T1, Topt aura une valeur supérieure à T1.

En pratique, le circuit de calcul commence par déterminer dans la phase 112, quel est l'histogramme qui a le plus d'information utile, (quantité de pixels non saturés ni sous-exposés). Il applique pour cela un algorithme de comparaison de valeur(s) caractéristique(s) ou de statistique(s) des k histogrammes H(Ti), tel que valeur moyenne, pourcentage de pixels saturés, ou correspondant à un niveau de gris donné, etc., puis il estime une valeur de temps souhaitable Topt à partir de l'histogramme retenu. De préférence, pour améliorer la fiabilité de la détermination, le circuit de calcul combine le résultat d'au moins deux algorithmes de comparaison, de préférence l'un basé sur la valeur moyenne et l'autre sur un pourcentage de pixels saturés, pour établir comme valeur souhaitable de temps d'exposition pour la phase d'acquisition nominale suivante, la moyenne des résultats fournis par les algorithmes. Egalement, la détermination de la valeur Topt tient compte des possibilités du séquenceur (temps de référence, temps ligne).

Eventuellement, on pourrait prévoir que la valeur de temps d'exposition optimale définie par le mode de mesure est obtenue en utilisant une valeur de gain G différent de 1. Dans ce cas le circuit de calcul vient modifier les deux valeurs correspondantes, temps d'exposition Tr et gain G dans le registre REG de paramètres de prise de vue. L'histogramme final obtenu sur l'image finale sera alors modifié avec un gain total = G x (Topt / Trf), où Trf est le temps d'intégration associé à l'histogramme retenu dans le mode de mesure pour le calcul de Topt.

Ces calculs réalisés par le circuit de traitement numérique COMP sont très rapides : en quelques coups d'horloge, c'est à dire en pratique en moins d'une microseconde, la valeur Topt est fournie et stockée dans le registre de paramètres de prise de vue du capteur pour définir la valeur Tr de temps d'exposition des pixels en mode d'acquisition nominale. Le mode de mesure se termine et le mode d'acquisition nominale est activé à la suite : le capteur réalise une nouvelle prise d'image, en mode d'acquisition nominale, utilisant les valeurs courantes du registre de paramètres de prise de vue, dont la valeur Tr=Topt, et fournit l'image obtenue au système externe de traitement pour décodage/ reconnaissance du code.

L'invention qui vient d'être décrite, applicable à tout capteur CMOS utilisé dans un lecteur de code lisible optiquement, permet d'améliorer considérablement le temps de réponse et la consommation du lecteur, de réduire sa consommation. L'homme du métier saura faire les adaptations nécessaires en fonction du capteur considéré, en particulier en fonction des modes de capture mise en œuvre dans le capteur, de la topologie des lignes de commande de la matrice de pixels, et de la structure des pixels qui peut être plus ou moins complexe selon qu'elle met en œuvre des schémas de lecture perfectionnés, à réduction de bruit de lecture (double échantillonnage corrélé), des étages de gain par multiplication de charges, etc. L'homme du métier saura appliquer les phases d'acquisition rapide et détermination du mode de mesure qui ont été décrites, et définir un motif de distribution des différentes valeurs de temps d'exposition le cas échéant, et/ou un schéma de définition de rangées et/ou colonnes de la matrice à échantillonner.

La mise en œuvre du procédé de l'invention dans un capteur se traduit par une configuration/programmation adéquate du séquenceur incluant la programmation en mémoire de tables définissant les schémas de distribution, de sous-échantillonnage, et les différentes valeurs de temps d'exposition utilisées dans le mode mesure.

## Revendications

1. Procédé d'acquisition d'une image de code(s) lisible(s) optiquement par un capteur d'image électronique de type CMOS, activé sur réception par le capteur d'un signal de déclenchement externe (Trig) et comprenant une prise d'image de mesure pour déterminer une valeur de temps d'exposition souhaitable, ladite valeur de temps d'exposition souhaitable étant appliquée ensuite comme valeur de temps d'exposition courante pour tous les pixels de la matrice, pour réaliser une prise d'image nominale, **caractérisé en ce que** la prise d'image de mesure (Mode-Mes) comprend :
- une phase d'intégration (100) commune aux pixels, appliquant k différentes valeurs (Ti) de temps d'exposition des pixels distribuées de façon régulière selon les rangées ou les colonnes de la matrice, chaque pixel étant associé à une valeur de temps d'exposition parmi les k différentes valeurs, k entier au moins égal à 2 ;
- une phase d'acquisition rapide (102) de données numériques d'image (DATA(Ti)) pour les différentes valeurs de temps d'exposition des pixels, comprenant une phase de lecture rapide par sous-échantillonnage des rangées de la matrice ; et
- une phase de détermination (110) de la valeur de temps d'exposition souhaitable (Topt) par comparaison d'histogrammes calculés sur la base des données numériques d'image obtenues dans la phase d'acquisition rapide pour chaque valeur différente de temps d'exposition.

2. Procédé d'acquisition selon la revendication 1, appliquant un motif de distribution périodique des k valeurs (Ti) de temps d'exposition sur les colonnes de la matrice.

3. Procédé d'acquisition selon la revendication 1 ou 2, dans lequel la phase de lecture rapide applique un sous-échantillonnage des rangées, qui est dans un rapport de 1 sur 8, 16 ou 32.

4. Procédé d'acquisition selon l'une des revendications 1 à 3, dans lequel la phase de lecture rapide (102) est appliquée seulement sur une ou des zones prédéfinies de la matrice.

5. Procédé d'acquisition selon l'une quelconque des revendications 1 à 3, excluant pour la phase de lecture rapide (102) une ou des zones prédéfinies de la matrice de pixels.

6. Procédé d'acquisition selon l'une des revendications 1 à 4, utilisant des moyens de conversion analogique numérique pour la lecture des pixels qui sont configurés avec une résolution nominale d'au moins dix bits pour la prise d'image nominale, et qui sont configurés avec une résolution réduite, égale ou inférieure à 8 bits pour la prise d'image de mesure.

7. Procédé d'acquisition selon l'une quelconque des revendications précédentes, dans lequel les histogrammes pour les k différentes valeurs de temps d'exposition (T1, ...Tk) du mode de mesure sont calculés sur un nombre de niveaux de gris inférieur au nombre de niveaux de gris correspondant à la résolution des moyens de conversion analogique numérique dans le mode de mesure.

8. Procédé d'acquisition selon l'une quelconque des revendications précédentes, dans lequel la phase (112) de détermination de la valeur souhaitable de temps d'exposition (Topt) applique au moins deux algorithmes de comparaison d'histogrammes, chaque algorithme délivrant en sortie une première valeur, et établit comme valeur souhaitable de temps d'exposition pour la phase d'acquisition nominale suivante, la moyenne desdits premières valeurs.

9. Procédé d'acquisition selon l'une quelconque des revendications précédentes dans lequel la durée de la prise d'image de mesure est égale à environ 10% ou moins de la durée de la prise d'image nominale.

## Patentansprüche

1. Verfahren zum Erfassen eines Bildes von einem oder mehreren Codes, die durch einen elektronischen Bildsensor des CMOS-Typs optisch lesbar sind, der beim Empfang eines externen Triggersignals (Trig) durch den Sensor aktiviert wird und die Aufnahme eines Messbildes umfasst, um einen wünschenswerten Belichtungszeitwert zu bestimmen, wobei der wünschenswerte Belichtungszeitwert dann als aktueller Belichtungszeitwert für alle Pixel der Matrix angewendet wird, um eine nominelle Bildaufnahme zu erzielen, **dadurch gekennzeichnet, dass** die Messbildaufnahme (Mode-Mes) Folgendes umfasst:
- eine den Pixeln gemeinsame Integrationsphase (100), die k verschiedene Belichtungszeitwerte (Ti) der in regelmäßiger Weise in den Reihen oder Spalten der Matrix verteilten Pixel anwendet, wobei jedes Pixel mit einem Belichtungszeitwert unter den k verschiedenen Werten assoziiert ist, wobei k eine ganze Zahl von mindestens 2 ist;
- eine schnelle Erfassungsphase (102) von digitalen Bilddaten (DATA(Ti)) für die verschiedenen Belichtungszeitwerte der Pixel, die eine schnelle Lesephase durch Unterabtastung der Reihen der Matrix umfasst; und
- eine Phase (110) des Bestimmens des wünschenswerten Belichtungszeitwertes (Topt) durch Vergleichen von Histogrammen, die auf der Basis der in der schnellen Erfassungsphase erhaltenen digitalen Bilddaten für jeden unterschiedlichen Belichtungszeitwert berechnet wurden.

2. Erfassungsverfahren nach Anspruch 1, wobei ein periodisches Verteilungsmuster der k Belichtungszeitwerte (Ti) über die Spalten der Matrix angewendet wird.

3. Erfassungsverfahren nach Anspruch 1 oder 2, wobei die schnelle Lesephase eine Unterabtastung von Reihen anwendet, die in einem Verhältnis von 1 zu 8, 16 oder 32 ist.

4. Erfassungsverfahren nach einem der Ansprüche 1 bis 3, wobei die schnelle Lesephase (102) nur auf eine oder mehrere vordefinierte Zonen der Matrix angewendet wird.

5. Erfassungsverfahren nach einem der Ansprüche 1 bis 3 unter Ausschluss von einer oder mehreren vordefinierten Zonen der Pixelmatrix für die schnelle Lesephase (102).

6. Erfassungsverfahren nach einem der Ansprüche 1 bis 4 unter Verwendung von Analog-Digital-Wandlern zum Lesen der Pixel, die für die nominelle Bildaufnahme mit einer nominellen Auflösung von mindestens zehn Bit konfiguriert sind und die für die Messbildaufnahme mit einer reduzierten Auflösung von gleich oder weniger als 8 Bit konfiguriert sind.

7. Erfassungsverfahren nach einem der vorherigen Ansprüche, wobei die Histogramme für die k verschiedenen Belichtungszeitwerte (T1, ...Tk) des Messmodus auf einer Anzahl von Graustufen berechnet werden, die kleiner ist als die Anzahl von Graustufen entsprechend der Auflösung der Analog-Digital-Wandlungsmittel im Messmodus.

8. Erfassungsverfahren nach einem der vorherigen Ansprüche, wobei die Phase (112) des Bestimmens des wünschenswerten Belichtungszeitwertes (Topt) mindestens zwei Histogrammvergleichsalgorithmen anwendet, wobei jeder Algorithmus einen ersten Wert ausgibt und als wünschenswerten Belichtungszeitwert für die folgende nominelle Erfassungsphase den Mittelwert der ersten Werte festlegt.

9. Erfassungsverfahren nach einem der vorherigen Ansprüche, wobei die Dauer der Messbildaufnahme etwa 10 % oder weniger der Dauer der nominellen Bildaufnahme beträgt.

## Claims

1. Method for acquiring an image of one or more codes that are optically readable by a CMOS electronic image sensor, which is activated on reception, by the sensor, of an external triggering signal (Trig) and which comprises carrying out a measurement image capture in order to determine a desirable exposure-time value, said desirable exposure-time value then being applied as current exposure-time value to all the pixels of the matrix array, in order to carry out a nominal image capture, **characterized in that** the measurement image capture (Mode-Mes) comprises:
- an integrating phase (100), which is common to the pixels, and in which k different exposure-time values (Ti) of the pixels that are regularly distributed over the rows or columns of the matrix array are applied, each pixel being associated with one exposure-time value among the k different values, k being an integer at least equal to 2;
- a rapid-acquiring phase (102), in which digital image data (DATA(Ti)) are rapidly acquired for the different pixel-exposure-time values, which comprises a rapid read-out phase applying under-sampling of the rows of the matrix array; and
- a determining phase (110), in which the desirable exposure-time value (Topt) is determined by comparing histograms calculated on the basis of the digital image data obtained in the rapid-acquiring phase for each different exposure-time value.

2. Acquiring method according to claim 1, applying a periodic distribution pattern of the k exposure-time values (Ti) to the columns of the matrix array.

3. Acquiring method according to claim 1 or 2, wherein the rapid read-out phase applies under-sampling of the rows, which is in a ratio of 1 to 8, 16 or 32.

4. Acquiring method according to one of claims 1 to 3, wherein the rapid read-out phase (102) is only applied to one or more predefined zones of the matrix array.

5. Acquiring method according to any one of claims 1 to 3, excluding, for the rapid read-out phase (102), one or more predefined zones of the pixel matrix array.

6. Acquiring method according to one of claims 1 to 4, using analogue-digital conversion means for reading the pixels that are configured with a nominal resolution of at least ten bits for the nominal image capture, and configured with a decreased resolution equal to or lower than eight bits for the measurement image capture.

7. Acquiring method according to any one of the preceding claims, wherein the histograms for the k different exposure-time values (T1, ...Tk) of the measuring mode are calculated with a number of greyscale levels lower than the number of greyscale levels corresponding to the resolution of the analogue-digital conversion means in the measuring mode.

8. Acquiring method according to any one of the preceding claims, wherein the determining phase (112), in which the desirable exposure-time value (Topt) is determined, applies at least two histogram-comparing algorithms, each algorithm delivering as output a first value, and establishes, as desirable exposure-time value for the following nominal acquiring phase, the average of said first values.

9. Acquiring method according to any one of the preceding claims, in which the duration for the measurement image capture is about 10% or less that of the nominal image capture.
